**Europäisches Patentamt**

**European Patent Office**

**Office européen des brevets**

(19)

(11) Veröffentlichungsnummer: **0 255 914**
**B1**

(12) **EUROPÄISCHE PATENTSCHRIFT**

(45) Veröffentlichungstag der Patentschrift:
11.07.90

(51) Int. Cl.⁵: **C02F 1/48**

(21) Anmeldenummer: 87110961.7

(22) Anmeldetag: 29.07.87

(54) Vorrichtung zur Beseitigung von Kesselstein bzw. zum Verhüten der Bildung von Kesselstein.

(30) Priorität: 02.08.86 DE 8620798 U
28.08.86 DE 3629288

(43) Veröffentlichungstag der Anmeldung:
17.02.88 Patentblatt 88/7

(45) Bekanntmachung des Hinweises auf die Patenterteilung:
11.07.90 Patentblatt 90/28

(84) Benannte Vertragsstaaten:
BE DE FR GB GR IT LU NL SE

(56) Entgegenhaltungen:
EP-A- 0 083 444
DE-A- 3 428 085
GB-A- 878 525

(73) Patentinhaber: Schulze, Elfriede, Schildstrasse 22,
D-8673 Rehau(DE)
Patentinhaber: Rudolph, Eberhard, Gnadenberg 60,
D-8437 Berg/Opf(DE)

(72) Erfinder: Schulze, Elfriede, Schildstrasse 22,
D-8673 Rehau(DE)
Erfinder: Rudolph, Eberhard, Gnadenberg 60,
D-8437 Berg/Opf(DE)

(74) Vertreter: Graf, Helmut, Dipl.-Ing. et al, Greflinger
Strasse 7 Postfach 382, D-8400 Regensburg(DE)

## Beschreibung

Die Erfindung bezieht sich auf eine Vorrichtung zur Beseitigung von Kesselstein bzw. zum Verhüten der Bildung von Kesselstein gemäß Oberbegriff Patentanspruch 1.

Für die Behandlung von Wasser zum Verhüten der Bildung von Kesselstein oder Kalkablagerung in wasserführenden Rohrsystemen sind bereits die unterschiedlichsten Vorrichtungen bzw. Einrichtungen bekannt. Unter anderem sind auch Vorrichtungen bekannt, die eine Behandlung von stark kalk- und eisenhaltigem Wasser mittels magnetischer Felder vorsehen, wobei diese Geräte auf dem durch praktische Experimente nachgewiesenen physikalischen Effekt beruhen, daß die in einem kalk- und eisenhaltigen Wasser enthaltenen, zu Ablagerungen und damit auch zu Störungen bzw. Verstopfungen in einem wasserführenden System führenden Bestandteile beim Durchtritt des Wassers durch ein Magnetfeld in ihrer Wirkung derart "neutralisiert werden", daß Ablagerungen in dem wasserführenden System (an Rohren, Behältern, elektrischen Warm-Wasser-Erzeugern, Sanitäreinrichtungen usw.) nicht mehr oder nur noch in einem sehr verminderten, die Funktionsfähigkeit dieses Systems nicht beeinträchtigendem Maße auftreten.

Bekannt ist speziell auch eine Vorrichtung der eingangs geschilderten Art (DE-A 3 428 085). Da praktische Versuche auch ergeben haben, daß die Wirksamkeit der Behandlung von Wasser in derartigen Vorrichtungen bzw. Geräten neben den im praktischen Einsatz sich ständig ändernden Zustandsgrößen des Wassers (insbesondere Fließgeschwindigkeit, Druck und Temperatur) bei vorgegebener Feldstärke des Magnetfeldes vor allem auch von der Verweildauer des Wassers im Magnetfeld, d.h. von der Länge des Wasser-Weges durch das Magnetfeld sowie davon abhängt, daß die Fließrichtung des Wassers die Magnetlinien möglichst unter einem Winkel von 90° schneidet, weisen viele bekannte Geräte bzw. Vorrichtungen unter den im praktischen Einsatz sich ständig ändernden Bedingungen keine ausreichende Wirkung auf oder eine beim ersten Einsatz vorhandene Wirkung geht im Laufe der Betriebszeit vor allem auch durch sich im Innenraum der Vorrichtung bildende Ablagerungen verloren. Letzteres ist insbesondere bei der Vorrichtung der eingangs geschilderten Art der Fall, bei der eisenhaltige Ablagerungen in dem vom Wasser durchströmten Innenraum der Vorrichtung zu einer ständigen Verringerung der magnetischen Feldstärke des von der Magnetspule erzeugten und vom Wasser durchströmten Magnetfeldes führen.

Aufgabe der Erfindung ist es, eine Vorrichtung der gattungsmäßigen Art dahingehend weiterzubilden, daß auch nach längerer Betriebsdauer ohne Wartungsarbeiten eine optimale Wirkungsweise sichergestellt ist.

Zur Lösung dieser Aufgabe ist eine Vorrichtung entsprechend dem kennzeichnenden Teil des Patentanspruches 1 ausgebildet.

Da bei der erfindungsgemäßen Vorrichtung die Zwischenwand sowie das Gehäuse zumindest in dem den Innenraum umgebenden Bereich aus einem Eisenguß gefertigt sind, der nach dem Gießen geglüht wurde, bestehen die mit dem Magnetfluß beaufschlagten Teile des Gehäuses sowie der Zwischenwand aus einem weichmagnetischem Werkstoff, der einerseits nach dem Gießen und Glühen eine Bearbeitung möglich macht, andererseits aber auch vorteilhafte magnetische Eigenschaften besitzt.

Das verwendete Material besitzt eine geringe Koerzitivkraft sowie vor allem auch die Eigenschaft, daß bei Ansteuerung der Magnetspule mit dem sich in seiner Polarität periodisch ändernden (pulsierenden) Gleichstrom das von der Magnetspule erzeugte Magnetfeld durch die geringe magnetische Remanenz des Gehäuses sowie der Zwischenwand dem Stromverlauf sehr exakt folgen kann. Sich evtl. im Innenraum des Gehäuses kurzzeitig angelagerte Teilchen kommen somit immer dann, wenn das Magnetfeld nicht vorhanden ist (bei pulsierendem Magnetfeld), sowie auch beim Umschalten der Flußrichtung des Gleichstromes wegen der fehlenden magnetischen Remanenz von der Innenfläche des Gehäuses sofort frei und werden mit dem Wasser mitgeführt.

Besonders wesentlich für die Funktion der erfindungsgemäßen Vorrichtung ist auch, daß der den vom Wasser durchströmten Innenraum des Gehäuses an seiner Umfangsfläche begrenzende ringförmige Wandabschnitt aus nichtmagnetischem Material in Richtung der Gehäuseachse eine Länge aufweist, die größer ist als der kleinste Abstand zwischen der den Innenraum begrenzenden Innenfläche des Gehäuses und der Zwischenwand.

Hierdurch ist sichergestellt, daß die Magnetlinien des von der Magnetspule erzeugten Magnetfeldes unter Einschluß der Zwischenwand hauptsächlich dort zwischen den einander gegenüberliegenden Innenflächen des Gehäuses verlaufen, wo diese Magnetlinien weitestgehend senkrecht von der Strömungsrichtung des Wassers geschnitten werden, und daß insbesondere auch der an dem ringförmigen Wandabschnitt gebildete Magnetspalt (selbst während einer längeren Betriebsdauer) nicht durch eisenhaltige Ablagerungen im Innenraum des Gehäuses überbrückt wird, was zu einer Reduzierung der magnetischen Feldstärke in dem vom Wasser durchströmten Bereich des Innenraumes und damit zu einer Abnahme sowie schließlich zu einer völligen Aufhebung der Funktionstüchtigkeit führen würde.

Durch die bei einer Ausführungsform der Erfindung vorhandene Mindestspaltbreite des im Gehäuse zwischen der Magnetspule und dem Innenraum gebildeten Spaltes (Magnetspalt) von wenigstens 3,8 mm ist sichergestellt, daß sich auch nach längerer Betriebsdauer im behandelten Wasser enthaltene eisenhaltige Partikel bzw. kalk- und eisenhaltige Partikel nicht derart an den Flächen des Innenraumes des Gehäuses der Vorrichtung ablagern können, daß durch diese Ablagerungen der Magnetspalt überbrückt und somit der Magnetfluß größtenteils über diese Ablagerungen "kurzgeschlossen" wird.

Da die den Innenraum begrenzenden Flächen des Gehäuses sowie die Flächen der Zwischenwand bevorzugt mit einem Überzug aus einem korrosionsbeständigem Material (Metall) versehen sind, welches auch einen hohen magnetischem Leitwert aufweist, ergibt sich für diese Flächen eine glatte Oberflächenstruktur. Ohne diesen Überzug würde das für die Herstellung des Gehäuses bzw. der Zwischenwand verwendete Material insbesondere nach der Bearbeitung zu einer relativ rauhen Oberflächenstruktur führen, die vom Wasser bzw. von den im Wasser enthaltenen Stoffen stark angegriffen wird, was zusätzlich zu einer Erhöhung der Rauhigkeit der Oberflächenstruktur führen würde. Durch die mit dem Überzug erreichte glatte Oberflächenstruktur können sich an den genannten Flächen auch durch magnetische Wirkung eisenhaltigen Partikeln bleibend nur schwer anlagern, d.h. solche Partikel werden von dem den Innenraum des Gehäuses durchfließenden Wasser besser mitgeführt bzw. mitgerissen. Außerdem kann auch durch diese Schicht der Magnetfluß durch den vom Wasser durchströmten Bereich des Innenraumes des Gehäuses verbessert werden.

Die Schichten aus korrosionsbeständigem Material bestehen vorzugsweise aus Nickel oder Kobalt und können beispielsweise galvanisch oder auf andere geeignete Weise aufgebracht werden.

Die Innenfläche des Gehäuses sowie die beiden Seiten der Zwischenwand sind bevorzugt jeweils mit kreisringförmigen, die Gehäuseachse umschließenden Abstufungen in der Form versehen, daß sich durch diese Abstufungen zusätzlich eine zickzackförmige Richtungsänderung des Wasserflusses durch den Innenraum des Gehäuses ergibt, wodurch auch bei hohem Wasserdurchfluß, d.h. bei hohen Fließgeschwindigkeiten eine ausreichende Verweildauer erzielt wird. Außerdem wird durch diese zick-zack-förmige Änderung des Strömungsflusses erreicht, daß das fließende Wasser die Magnetlinien mehrfach möglichst genau unter 90°, d.h. in einer für die Funktion optimalen Weise schneidet.

Bei einer bevorzugten Ausführungsform der erfindungsgemäßen Vorrichtung ist die Zwischenwand an ihrem Rand leicht oval oder andersartig so ausgebildet, daß sich bei kreisringförmiger Ausbildung der radial außenliegenden und dieser Randfläche gegenüberliegend angeordneten Fläche des Innenraumes des Gehäuses ein entlang der Randfläche der Zwischenwand in seiner Breite ändernder Spalt zwischen den genannten Flächen ergibt, wodurch den in der Praxis sich ständig ändernden Zustandsgrößen des Wassers (insbes. Fließgeschwindigkeit und Druck) für eine optimale Behandlung des Wassers Rechnung getragen wird.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 eine erste Ausführungform der erfindungsgemäßen Vorrichtung in Draufsicht, d.h. in Blickrichtung der Gehäuseachse, teilweise geschnitten sowie hierbei teilweise auch unter Weglassung der Zwischenwand;

Fig. 2 einen Schnitt entsprechend der Linie I-I der Fig.1;

Fig. 3 in schematischer Darstellung und im Längsschnitt eine weitere Ausführungsform der erfindungsgemäßen Vorrichtung;

Fig. 4 in vereinfachter Darstellung einen Schnitt entsprechend der Linie I-I der Fig. 3;

Fig. 5 eine elektrische Schaltung zur Ansteuerung der Magnetspule der Vorrichtung gemäß Fig. 3.

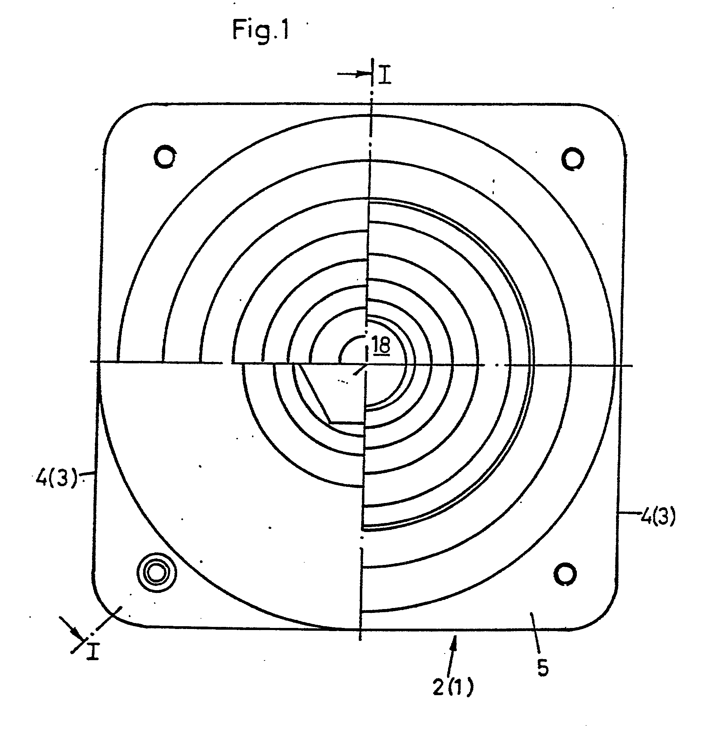

Die in den Figuren 1 bis 2 dargestellte Vorrichtung besteht aus zwei tellerartigen Gehäuseteilen 1 und 2, die jeweils eine quadratische Umfangsfläche 3 bzw. 4 gleicher Größe mit abgerundeten Ecken aufweisen und ansonsten rotationssymmetrisch zu einer Symmetrieachse S ausgebildet sind, die bei aneinander montierten Gehäuseteilen 1 und 2 die Gehäuseachse bildet und auch die Schnittpunkte der die Ecken der Umfangs fläche 3 bzw. 4 verbindenden Diagonalen schneidet. Die Gehäuseteile 1 und 2 sind aus ferritischem Material, d.h. aus Eisenguß (z.B. GG 25) hergestellt, wobei dieser Guß nach dem Gießen geglüht und anschließend bearbeitet wird. Dieses ferritische Material hat bei vertretbaren Herstellungskosten sowie bei der Möglichkeit einer Bearbeitung nach dem Gießen und Glühen und ausreichender mechanischer Festigkeit optimale magnetische Eigenschaften. Die Gehäuseteile 1 und 2 sind an ihren bei montiertem Gehäuse gegeneinander anliegenden Stirnflächen 5 derart geformt bzw. derart mit einer zu der jeweiligen Stirnfläche 5 hin offenen Ausnehmung versehen, daß sich im Inneren des Gehäuses ein zur Symmetrieachse S kreisbzw. rotationssymmetrisch ausgebildeter Innenraum 6 ergibt, der durch die Gehäuseteile 1 und 2 bzw. durch deren, den Innenraum 6 begrenzende Innenfläche nach außen hin abgeschlossen ist. Die den Innenraum 6 begrenzenden Innenflächen der Gehäuseteile 1 und 2 weisen mehrere ringförmige Abstufungen auf. Diese sind durch die Symmetrieachse S jeweils umschließende und achsgleich mit dieser Symmetrieachse S liegende Ringflächen 7, 8, 9 und 10 sowie 11, 12 und 13, wobei die Ringflächen 7 bis 10 mit ihrer Fläche senkrecht zur Symmetrieachse S und die Ringflächen 11 bis 13 mit ihrer Oberfläche parallel zur Symmetrieachse bzw. senkrecht zum Radius des rotationssymmetrischen Innenraumes liegen. Von den Ringflächen 11 bis 13 weisen die kreiszylinderförmige Ringfläche 11 den größten Radius, die kreiszylinderförmige Ringfläche 13 den kleinsten Radius sowie die kreiszylinderförmige Ringfläche 12 einen Radius auf, der etwa dem Mittelwert zwischen dem Radius der Ringfläche 11 und dem Radius der Ringfläche 13 entspricht. Weiterhin sind die Ringfläche 11 zwischen den Ringflächen 7 und 8, die Ringfläche 12 zwischen den Ringflächen 8 und 9 und die Ringfläche 13 zwischen den Ringflächen 9 und 10 in der Form vorgesehen, daß der Abstand, den die beiden Gehäuseteile 1 und 2 im Bereich ihrer den Innenraum 6 begrenzenden Innenflächen in Richtung parallel zur Symmetrieachse S voneinander aufweisen entsprechend der Anordnung der Ringflächen 7 bis 10 mit zunehmendem Abstand von der Symmetrieachse S stufenförmig abnimmt.

Im Innenraum 6 ist eine Zwischenwand 14 angeordnet, die ebenfalls aus ferritischem Material besteht und den Innenraum 6 in zwei Kammern 6' bzw. 6" unterteilt. Die Zwischenwand 14, die kreisscheibenartig, d.h. rotationssymetrisch zu ihrer Mittelachse ausgebildet ist, ist mit dieser Mittelachse achsgleich mit der Symmetrieachse S bzw. Gehäuseachse im Innenraum 6 durch aus nichtmagnetischem Material, z.B. auch Kunststoff bestehende Distanzstücke 15 in allseitigem Abstand von den den Innenraum 6 begrenzenden Innenflächen der Gehäuseteile 1 und 2 gehalten und besitzt auch einen Durchmesser, der kleiner ist als der maximale Durchmesser des Innenraumes 6, so daß in dem radial außenliegenden und durch die Ringflächen 7 der beiden Gehäuseteile 1 und 2 begrenzten Bereich des Innenraumes 6 um den kreisringförmigen Rand der Zwischenwand 14 herum eine Strömungsmittelverbindung zwischen den Kammern 6' und 6" besteht. Die Zwischenwand 14 ist in ihrer Mitte an beiden Seiten mit jeweils einem als Spitze ausgebildeten Vorsprung 16 versehen, wobei der in der Kammer 6' vorgesehene Vorsprung 16 an der einen Seite der Zwischenwand 14 einer ein Innengewinde aufweisenden Einlaßöffnung 17 und der in der Kammer 6" vorgesehene Vorsprung 16 an der anderen Seite der Zwischenwand 14 einer, ebenfalls mit einen Innengewinde versehenen Auslaßöffnung 18 unmittelbar gegen- über liegen. Die Einlaßöffnung 17 sowie die Auslaßöffnung 18 sind mit ihren Achsen ebenfalls achsgleich mit der Symmetrieachse S bzw. mit der Gehäuseachse am Gehäuseteil 1 bzw. 2 vorgesehen.

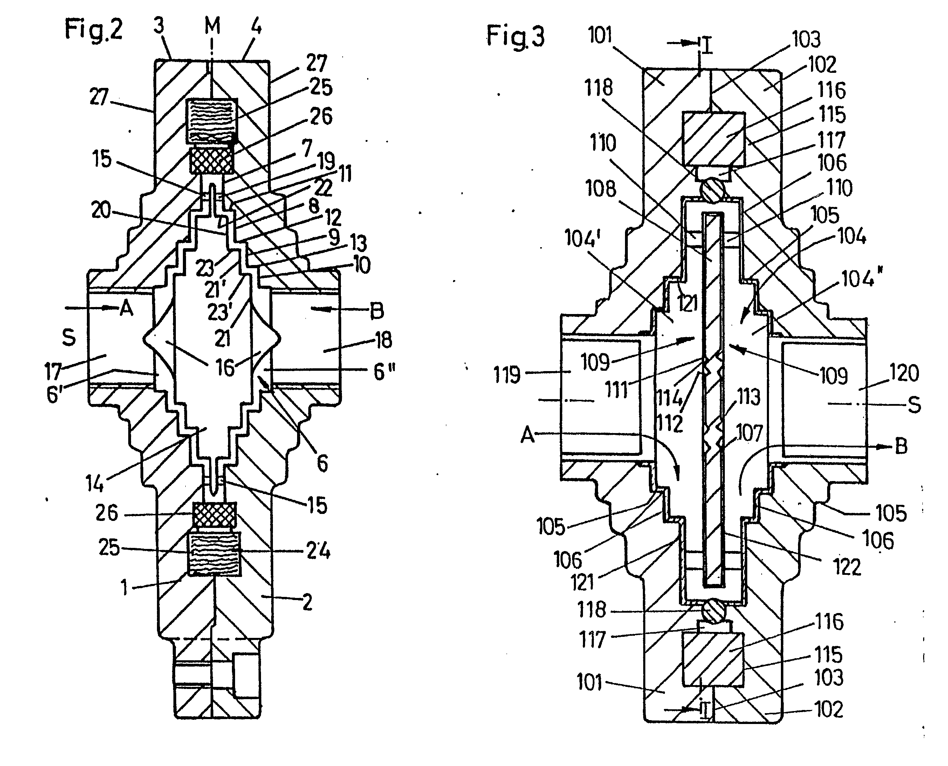

Die Zwischenwand 14 ist weiterhin an beiden Seiten mit ringförmigen, konzentrisch zur Symmetrieachse S verlaufenden Stufen in der Weise ausgebildet, daß die Dicke der Zwischenwand 14 in Richtung der Symmetrieachse S zum Umfang der Zwischenwand 14 hin stufenförmig abnimmt. Hierdurch sind an jeder Seite der Zwischenwand 14 die Symmetrieachse S umschließende und mit ihren Flächen senkrecht zur Symmetrieachse S liegende Ringflächen 19, 20, 21, 21' sowie dazwischenliegende, die Symmetrieachse S ebenfalls konzentrisch umschließende, mit ihrer Fläche jedoch parallel zur Symmetrieachse S liegende Ringflächen 22, 23, 23' gebildet, von denen die äußere Ringfläche 19 in den Umfangsrand der Zwischenwand 14 übergeht und die innere Ringfläche 21 den jeweiligen Vorsprung 16 umschließt. Von den Ringflächen 22 und 23' besitzt die Ringfläche 22 den größeren Radius und ist zwischen den Ringflächen 19 und 20 vorgesehen. Die Ringfläche 23' ist zwischen den Ringflächen 21 und 21' vorgesehen. Wie die Fig. 2 zeigt, liegt jede Ringfläche 19 im wesentlichen einer Ringfläche 7, jede Ringfläche 20 im wesentlichen einer Ringfläche 8 und die Ringfläche 21 bzw. 21' im wesentlichen jeweils einer Ringfläche 9 und 10 in Richtung der Symmetrieachse S gegenüber. Weiterhin ist die Anordnung so getroffen, daß der Radius der Ringflächen 22 kleiner ist als der Radius der Ringflächen 11 und der Radius der Ringflächen 23 bzw. 23' kleiner ist als der Radius der Ringflächen 12 bzw. 13.

In dem den Innenraum 6 umschließenden Bereich der Gehäuseteile 1 und 2 ist in diesen an deren Stirnflächen 5 jeweils- eine konzentrisch zur Symmetrieachse verlaufende nutenförmige Vertiefung 24 vorgesehen, wobei sich diese Vertiefungen bei miteinander verbundenen Gehäuseteilen 1 und 2 zu einem den Innenraum 6 sowie die Zwischenwand 14 konzentrisch umschließenden ringförmigen Kanal im Inneren des Gehäuses ergänzen, in welchem eine die Zwischenwand 14 ebenfalls konzentrisch umschließende ringförmige Magnetspule 25 angeordnet ist. Zwischen der Magnetspule 25 bzw. des diese Magnetspule aufnehmenden ringförmigen Kanals und dem Innenraum 6 ist zwischen beiden Gehäuseteilen 1 und 2 eine, die Zwischenwand 14 ebenfalls konzentrisch umschließende ringförmige Dichtung 26 aus einem nicht magnetischem Material, vorzugsweise aus Gummi oder Kunststoff eingespannt die mit ihrer der Symmetrieachse S zugewendeten inneren Ringfläche die äußere kreisringförmige Begrenzungs- bzw. Umfangsfläche des Innenraumes 6 bildet. Wesentlich ist, daß die beiden Gehäuseteile 1 und 2 bzw. deren Stirnflächen 5 bei montiertem Gehäuse im Bereich der Dichtung 26, aber auch in dem bezogen auf die Symmetrieachse S radial außerhalb der Dichtung 26 zwischen dieser und dem die Magnetspule 25 aufnehmenden Kanal liegenden Bereich einen Abstand voneinander aufweisen, der auf jeden Fall größer ist als der Abstand zwischen den jeweils einander zugewendeten Ringflächen 7 und 19, vorzugsweise auch größer oder höchstens gleich dem Abstand ist, den die einander zugewendeten Ringflächen 10 und 21 voneinander besitzen. Hierdurch ist sichergestellt, daß bei Beaufschlagung der Magnetspule 25 mit einem Strom (z.B. modulierter oder getakteter Gleichstrom), bevorzugt mit einem Gleichstrom, dessen Polarität nach einem Zeitprogramm geändert wird, sich im Innenraum 6 bzw. in den beiden Kammer 6' und 6" vor allem auch in dem radial außen liegenden und von den Ringflächen 7 bis 13 bzw. 19 bis 23' begrenzten Teil dieser Kammern ein Magnetfluß mit der erforderlichen Stärke unter Einschluß der Zwischenwand 14 ausbilden kann, der von der Magnetspule 25 erzeugte Magnetfluß also nur unwesentlich unter Umgehung des Innenraumes 6 direkt zwischen den Gehäuseteilen 1 und 2 verläuft. Durch den großen Abstand der Gehäuseteile 1 und 2 im Bereich der Dichtung 26 bzw. durch die relativ große Abmessung dieser Dichtung in Richtung der Symmetrieachse S wird weiterhin auch verhindert, daß durch eisen- oder eisenoxydhaltige Ablagerungen zwischen den Gehäuseteilen 1 und 2 im Bereich der ringförmigen Innenfläche der Dichtung 26 das von der Spule 25 erzeugte Magnetfeld kurzgeschlossen werden und somit durch Fehlen eines Magnetfeldes mit ausreichender Feldstärke im Innenraum 6 bzw. in den Kammern 6' und 6" die Wirkung der Vorrichtung verlorengehen könnte.

Aus Gründen der mechanischen Festigkeit, aber auch zur Erzielung eines möglichst gleichmäßigen magnetischen Widerstandes sind die beiden Gehäuseteile 1 und 2 an ihren bei montiertem Gehäuse einander angewendeten Außenflächen 27 ebenfalls konzentrisch zur Symmetrieachse S ringstufenartig derart ausgeführt, daß der Abstand der Ringflächen 7 bis 10 von dem in Richtung der Symmetrieachse S gegenüber liegenden Teil der Außenfläche 27 jeweils gleich ist, d.h. die Gehäuseteile 1 und 2 ausgehend von der Symmetrieachse S jeweils eine in etwa gleichbleibende Dicke besitzen.

Im praktischen Einsatz ist die Vorrichtung mit ihrer Einlaßöffnung 17 und mit ihre Auslaßöffnung 18 derart an ein wasserführendes Rohr angeschlossen bzw. in den Verlauf dieses Rohres eingesetzt, daß das Wasser entsprechend dem Pfeil A durch die Einlaßöffnung 17 in die Kammer 6' einströmen und entsprechend dem Pfeil B aus der Kammer 6" durch die Auslaßöffnung 18 ausströmen kann. Nach dem Einströmen durch die Einlaßöffnung 17 erfolgt zunächst eine Umlenkung des Wasserstromes radial nach außen, wobei dies Umlenkung durch den Vorsprung 16 begünstigt wird, d.h. der Vorsprung 16 dient vor allem auch dazu, eine Wirbelbildung im zuströmenden Wasser beim Umlenken weitestgehend zu verhindern. Nach dem Umfließen des äußeren und ringförmigen Randes der Zwischenwand 14 gelangt das Wasser in die Kammer 6" und fließt in dieser Kammer zunächst radial nach innen und dann nach Änderung der Flußrichtung durch die Auslaßöffnung 18 ab. Durch den in der Kammer 6" vorgesehenen Vorsprung 16 wird ebenfalls eine Wirbelbildung des aus der Kammer 6" abfließenden Wassers bei der Änderung der Flußrichtung weitestgehend vermieden. Weiterhin verhindern die Vorsprünge 16 Ablagerungen vor allem an der Zwischenwand 14, die zu einem Verstopfen bzw. zu Funktionsstörungen der Vorrichtung führen könnten.

Während des Flusses in der Kammer 6' radial nach außen sowie in der Kammer 6" radial nach innen, d.h. auf dem zwischen den Ringflächen 7 bis 13 und 19 bis 23 begrenzten Strömungsweg schneidet das Wasser die Magnetlinien des von der Magnetspule 25 erzeugten Magnetfeldes, wodurch die im Wasser enthaltenen kalk- und eisenhaltigen Fremdstoffe durch das pulsierende Magnetfeld derart "neutralisiert" werden, daß es nicht zu Kalkablagerungen bzw. zur Bildung von Kesselstein in dem sich an die Vorrichtung anschließenden, wasserführenden Rohrleitungssystem nicht kommen kann.

Durch die beschriebene Ausbildung der Vorrichtung wird zunächst, wie oben bereits ausgeführt wurde, eine wirksame Ausbildung des Magnetfeldes in den von Wasser durchströmten Bereichen der Kammern 6' und 6" erreicht sowie Störungen dieses Magnetfeldes durch Ablagerungen im Bereich der Dichtung 26 vermieden. Durch die ringstufenartige Ausbildung sowohl der den Innenraum 6 begrenzenden Innenfläche der Gehäuseteile 1 und 2 als auch der beiden Seiten der Zwischenwand 14 wird weiterhin erreicht, daß im Bereich der Kanten dieser ringstufenförmigen Ausbildung, d.h. am Übergangsbereich zwischen den Ringflächen 7 bis 10 und den Ringflächen 11 bis 13 bzw. am Übergangsbereich zwischen den Ringflächen 19 bis 21' und den Ringflächen 22 bis 23' jeweils eine erhöhte Konzentration der Magnetlinien erzielt wird.

Da die mit der Vorrichtung erzielte Wirkung bei vorgegebener Feldstärke des mit der Magnetspule 25 erzeugten Magnetfeldes neben den im praktischen Betrieb nicht beeinflußbaren, oftmals wechselnden chemischen und physikalischen Zustandsgrößen des Wassers (Fließgeschwindigkeit, Temperatur und Druck) vor allem auch von der jeweiligen Verweilzeit des Wassers im Magnetfeld sowie davon abhängt, daß die von der Magnetspule 25 erzeugten Magnetlinien möglichst senkrecht zur Strömungs- bzw. Flußrichtung des Wassers verlaufen, ergeben sich besonders vorteilhafte Ergebnisse mit der beschriebenen Vorrichtung dadurch, daß zumindest im äußeren Bereich der Kammern 6' und 6" das Wasser bei dem Fluß radial nach außen bzw. radial nach innen zugleich auch noch eine zickzack-förmige Umlenkung aus einer im wesentlichen radialen Flußrichtung in eine axiale Flußrichtung und anschließend wieder in eine radiale Flußrichtung erfährt. Hierfür sind die einander jeweils zugewendeten Ringflächen 7 und 19 bzw. 8 und 20 und die dazwischen liegende Ringfläche 11 bzw. 22 so angeordnet, daß zwischen den Ringflächen 7 und 19 bzw. zwischen den Ringflächen 8 und 20 nicht nur konzentrisch zur Symmetrieachse liegende ringförmige Räume in den Kammern 6' bzw. 6" gebildet sind, die (Räume) über eine untere bzw. eine obere, zwischen den Ringflächen 11 und 22 gebildete ringförmige Öffnung miteinander in Verbindung stehen, sondern zur Erzielung dieser zusätzlichen zick-zack-förmigen Umlenkung sind in jeder Kammer 6' bzw. 6" die Ringfläche 7 und die Ringfläche 20 so vorgesehen, daß diese Flächen zumindest den gleichen Abstand von einer senkrecht zum Symmetrieachse S verlaufenden Mittelebene M aufweisen. Vorzugsweise besitzt jedoch die den inneren ringförmigen Raum jeder Kammer 6' bzw. 6" an der Zwischenwand 14 begrenzende Ringfläche 20 einen größeren Abstand von der Mittelebene M als die den äußeren ringförmigen Raum an der Innenfläche des Gehäuseteils 1 bzw. 2 begrenzende Ringfläche 7. Zwischen den Flächen 9 und 21' bzw. 10 und 21 sind ebenfalls derartige Ringräume gebildet. Die ringförmigen Abstufungen än der Innenfläche der Gehäuseteile 1 und 2 und an der Zwischenwand 14 können beispielsweise so ausgebildet sein, daß der Abstand zwischen der Innenfläche der Gehäuseteile 1 und 2 und der Zwischenwand 14 mit zunehmendem radialen Abstand von der Achse S abnimmt. Durch diese Ausbildung werden im Innenraum 6 verschiedene Druck- und Strömungsverhältnisse ermöglicht, so daß unabhängig von den im praktischen Einsatz sich ändernden und nicht beeinflußbaren Zustandsgrößen des Wassers (Temperatur, Durchflußmenge und Druck) in zumindest einigen Bereichen des Innenraumes 6 stets optimale Verhältnisse für die Behandlung vorliegen.

Die in den Figuren 3 bis 5 dargestellte Vorrichtung besteht aus den beiden tellerartigen Gehäuseteilen 101 und 102, die auch bei dieser Ausführungsform wiederum rotationssymmetrisch zu einer Symmetrieachse S ausgebildet sind, welche bei aneinander montierten Gehäuseteilen 101 und 102 die Gehäuseachse bildet. Die Gehäuseteile 101 und 102 sind aus Eisenguß mit einem C-Anteil von weniger als 0,5%, vorzugsweise aus ferritischem Material, d.h. aus Eisenguß (z.B. GG 25) hergestellt, wobei dieser Guß nach dem Gießen geglüht und anschließend bearbeitet wird. Das letztgenannte ferritische Material hat bei vertretbaren Herstellungskosten sowie bei der Möglichkeit einer Bearbeitung nach dem Gießen und Glühen und ausreichender mechanischer Festigkeit optimale magnetische Eigenschaften. Die Gehäuseteile 101 und 102 sind an ihren bei montiertem Gehäuse gegeneinander anliegenden Stirnflächen 103 derart geformt oder bearbeitet bzw. derart mit einer zu der jeweiligen Stirnfläche 103 hin offenen Ausnehmung versehen, daß sich im Inneren des Gehäuses ein zur Symmetrieachse S kreis- bzw. rotationssymmetrisch ausgebildeter Innenraum 104 ergibt, der durch die Gehäuseteile 101 und 102 bzw. durch deren, den Innenraum 104 begrenzende Innenflächen nach außen hin abgeschlossen ist. Die den Innenraum 104 begrenzenden Innenflächen der Gehäuseteile 101 und 102 weist mehrere ringförmige Abstufungen auf. Diese sind durch die Symmetrieachse jeweils umschließende, achsgleich mit der Symmetrieachse S liegende und konzentrisch zueinander angeordnete Ringflächen 105 und 106 gebildet, von denen die Ringflächen 105 mit ihrer Oberfläche parallel zur Symmetrieachse bzw. senkrecht zum Radius des rotationssymmetrischen Innenraumes 104 und die Ringflächen 106 mit ihrer Oberfläche senkrecht zur Symmetrieachse S liegen. Am Übergangsbereich zwischen einander jeweils benachbarten, eine Stufe bildenden Ringflächen 105 und 106 ist jeweils eine die Symmetrieachse S kreisringförmig umschließende Kante 107 gebildet. Außerdem ist die Anordnung so getroffen, daß der Abstand zwischen den in Richtung der Symmetrieachse S einander gegenüberliegenden Ringflächen 105 und 106 an den Gehäuseteilen 101 und 102 mit zunehmendem Abstand von der Symmetrieachse S abnimmt.

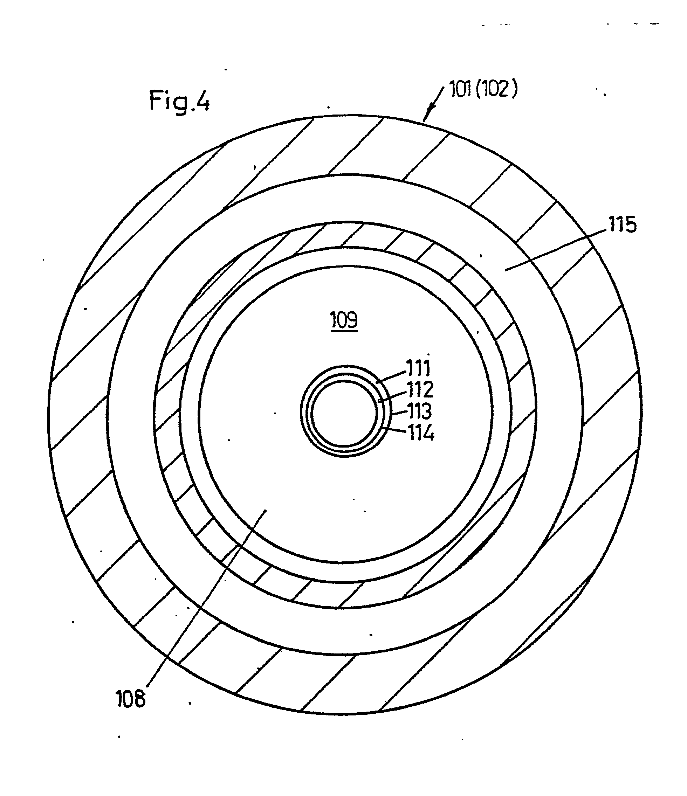

Im Innenraum 104 ist eine Zwischenwand 108 angeordnet, die ebenfalls aus ferromagnetischem Material, vorzugsweise aus ferritischem Material besteht und den Innenraum 104 in zwei Kammern 104′ und 104″ unterteilt. Die Zwischenwand 108 ist scheibenartig ausgebildet, ist mit ihrer senkrecht zu den Stirnseiten 109 der Zwischenwand 108 verlaufenden Mittelachse achsgleich mit der Symmetrieachse S angeordnet und durch Distanzstücke 110 in allseitigem Abstand von den den Innenraum 104 begrenzenden Innenflächen der Gehäuseteile 101 und 102 gehalten. Die Zwischenwand 110 besitzt, wie die Fig. 4 zeigt, einen leicht ovalen Querschnitt, wobei der maximale Durchmesser der Zwischenwand 108 kleiner ist als der maximale Querschnitt des Innenraumes 104, so daß in dem radial außen liegenden und durch die beiden äußersten Ringflächen 106 der Gehäuseteile 101 und 102 begrenzten Bereich des Innenraumes 104 um den Rand der Zwischenwand 108 herum eine Strömungsverbindung zwischen den Kammern 104′ und 104″ besteht. Durch die leicht ovale Form des Außenumfangs bzw. des Randes der Zwischenwand 108 ist bei der kreissymmetrischen Ausbildung des Innenraumes 104 der zwischen diesem Rand der Zwischenwand 108 und der Innenfläche des Gehäuses gebildete, die Strömungsmittelverbindung zwischen den Kammern 104′ und 104″ herstellende Spalt entlang des Randes der Zwischenwand 108 unterschiedlich breit, d.h. an zwei ersten Abschnitten, die um 180° um die Symmetrieachse S gegeneinander versetzt sind, weist dieser Spalt seine kleinste Breite auf und an zwei zweiten Abschnitten, die jeweils um 90° gegenüber den ersten Abschnitten um die Symmetrieachse S versetzt sind, besitzt dieser Spalt seine größte Breite. Diese unterschiedliche Spaltbreite trägt zunächst einmal den in der Praxis unterschiedlichen bzw. sich ändernden Zustandsgrößen des den Innenraum 104 durchfließenden Wassers (insbes. Fließgeschwindigkeit, Druck und Temperatur) Rechnung, und zwar in der Weise, daß die Behandlung des Wassers bei allen in der Praxis vorkommenden Zustandsgrößen optimal erfolgt. Weiterhin wird durch diesen, sich um den Umfang der Zwischenwand in seiner Breite ändernden Spalt auch ein für eine optimale Behandlung des Wassers optimaler Verlauf der magnetischen Feldlinien erreicht.

In die beiden Stirnseiten 109 der Zwischenwand 108 sind zwei im Querschnitt V-förmige, konzentrisch zueinander angeordnete und bei der dargestellten Ausführungsform unmittelbar aneinander anschließende sowie achsgleich mit der Symmetrieachse S liegende Vertiefungen 111 und 112 eingedreht, wobei der Rand dieser Vertiefungen sowie insbes. auch der Übergang zwischen diesen Vertiefungen Kanten 113 bzw. 114 bilden, an denen die magnetischen Feldlinien ebenso wie an den Kanten 107 bevorzugt, d.h. konzentriert in den Raum der Kammer 104′ bzw. 104″ austreten, wodurch ebenfalls die Behandlung des die Vorrichtung durchströmenden Wassers verbessert wird.

In dem den Innenraum 104 umschließenden Bereich der Gehäuseteile 101 und 102 ist in deren Stirnflächen 103 jeweils eine konzentrisch zur Symmetrieachse S verlaufende nutenförmige Vertiefung 115 eingebracht, wobei sich beide Vertiefungen 115 bei miteinander verbundenen Gehäuseteilen 101 und 102 zu einem den Innenraum 104 sowie die Zwischenwand 108 konzentrisch umschliessenden ringförmigen Kanal im Inneren des Gehäuses ergänzen, in welchem eine die Zwischenwand 108 ebenfalls im wesentlichen konzentrisch umschließende ringförmige Magnetspule 116 angeordnet ist. Radial außerhalb der Magnetspule 116 liegen die Gehäuseteile 101 und 102 mit ihren Stirnflächen 103 flächig gegeneinander an. Radial innerhalb der Magnetspule 116 bzw. des Kanales 115 sind die Gehäuseteile 101 und 102 an ihrer Stirnfläche 103 so ausgebildet, daß dort bei aneinander montierten Gehäuseteilen 101 und 102 zwischen diesen Gehäuseteilen ein Spalt verbleibt, der sich ausgehend von der Magnetspule 116 radial nach innen bis in den Innenraum 104 erstreckt. In diesem Spalt 117 ist eine ringförmige Dichtung bzw. ein Dichtungsring 118 angeordnet, der zwischen den Gehäuseteilen 101 und 102 eingespannt ist, die Symmetrieachse S konzentrisch umschließt und den Innenraum 104 des Gehäuses zu der Magnetspule 116 bzw. zu dem Kanal 115 hin abschließt. Die Breite des Spaltes 117 in einer Achsrichtung parallel zur Symmetrieachse S beträgt bei der Ausführungsform nach den Fig. 3 bis 5 wenigstens 3,8 mm, wodurch sichergestellt ist, daß für eine wirksame Behandlung des das Gehäuse bzw. den Innenraum 104 durchströmenden Wassers der größte Teil der Feld- bzw. Magnetlinien des von der Spule 116 erzeugten Magnetfeldes zwischen den Gehäuseteilen 101 und 102 (unter Einschluß der Zwischenwand 108) im Bereich des Innenraumes 104 bzw. im Bereich der Kammern 104' und 104" verläuft, und zwar insbes. auch derart verläuft, daß das die Kammern 104' bzw. 104" durchströmende Wasser diese magnetische Feldlinien möglichst unter einem Winkel von 90° schneidet, wie dies für eine optimale Behandlung angestrebt wird. Dadurch, daß der Spalt 117 eine Breite von wenigstens 3,8 mm aufweist, ist auch sichergestellt, daß sich dieser Spalt im Bereich des Dichtungsringes 118 und innerhalb des Innenraumes 104, d.h. radial innerhalb des Dichtungsringes 118 nicht durch im Bereich des Dichtungsringes sich anlagernde, Eisen oder Eisenoxyd haltige, im behandelten Wasser enthaltene Partikel zusetzen bzw. durch derartige Partikel überbrückt werden kann, was zu einer Reduzierung der den Innenraum 104 bzw. die Kammern 104' und 104" schneidenden Magnetlinien führen würde.

Im mittleren Bereich ist das Gehäuseteil 101 mit einer die Symmetrieachse S konzentrich umschließenden Einlaßöffnung 119 versehen, deren in die Kammer 104' mündende Öffnung in etwa den ringförmigen Vertiefungen 111 und 112 der betreffenden Stirnseite der Zwischenwand 108 gegenüberliegt. Im mittleren Bereich ist das Gehäuseteil 102 mit einer hinsichtlich Anordnung und Ausbildung der Einlaßöffnung 119 entsprechenden Auslaßöffnung 120 versehen. Im praktischen Einsatz ist die Vorrichtung mit ihrer Einlaßöffnung 119 und mit ihrer Auslaßöffnung 120 derart an ein Wasser führendes Rohr angeschlossen bzw. in den Verlauf dieses Rohres eingesetzt, daß das Wasser entsprechend dem Pfeil A durch die Einlaßöffnung 119 in die Kammer 104' einströmen und entsprechend dem Pfeil B aus der Kammer 104" durch die Auslaßöffnung 120 ausströmen kann. Nach dem Einströmen durch die Einlaßöffnung 119 erfolgt zunächst eine Umlenkung des Wasserstromes radial nach außen. Nach dem Umfließen des äußeren, leicht oval ausgebildeten Randes der Zwischenwand 108 gelangt das Wasser in die Kammer 104" und fließt in dieser Kammer zunächst radial nach innen und dann nach Änderung der Flußrichtung durch die Auslaßöffnung 120 ab.

Während des Flusses in der Kammer 104' radial nach außen sowie in der Kammer 104" radial nach innen, d.h. auf dem zwischen den Ringflächen 105 und 106 und den Stirnseiten 109 der Zwischenwand 108 begrenzten Strömungsweg, schneidet das Wasser die Magnetlinien des von der Magnetspule 116 erzeugten Magnetfeldes, wodurch die im Wasser enthaltenen kalk- und eisenhaltigen Fremdstoffe durch das pulsierende Magnetfeld derart "neutralisiert" werden, daß es nicht zu Kalkablagerungen bzw. zur Bildung von Kesselstein in dem sich an die Vorrichtung anschließenden, Wasser führenden Rohrleitungssystem kommen kann.

Durch die ringförmigen Vertiefungen 111 und 112 bzw. durch die von diesen Vertiefungen gebildeten Kanten 113 und 114 und durch die von diesen Kanten hervorgerufene Verteilung bzw. Konzentration der magnetischen Feldlinien wird auch erreicht, daß das durch die Einlaßöffnung 119 eintretende bzw. durch die Auslaßöffnung 120 abfließende Wasser bereits bei diesem ersten Eintritt und auch beim Austritt in den Innenraum bzw. aus dem Innenraum einer Behandlung unterzogen wird.

Um zu verhindern, daß sich durch die nicht vermeidbare magnetische Remanenz des ferromagnetischen Materials der Gehäuseteile 101 und 102 sowie der Zwischenwand 108 durch magnetische Wirkung an den den Innenraum 104 begrenzenden Flächen der Gehäuseteile 101 und 102 sowie an den Flächen der Zwischenwand 108 kalk- und eisenhaltige Fremdstoffe ablagern, die die für den Austritt der Magnetlinien bzw. für eine optimale Strömung innerhalb des Innenraumes 104 notwendigen und von den Ringflächen 105 und 106 gebildeten Ringstufenzusätzen, den im Bereich des Dichtungsringes 118 zwischen den Gehäuseteilen 101 und 102 gebildeten Magnetspalt (Spalt 117) überbrücken und/oder den im Innenraum 104 des Gehäuses gebildeten Strömungskanal verstopfen könnten, sind die Gehäuseteile 101 und 102 an ihren, den Innenraum 104 begrenzenden Flächen sowie die Zwischenwand 108 an ihren Stirnseiten 109 und an der radial außen liegenden Kante bzw. an dem radial außen liegenden Rand mit einer Schicht 121 bzw. 122 aus einem korrosionsbeständigem Metall mit hohem magnetischem Leitwert, z.B. mit einer Schicht 121 bzw. 122 aus Kobalt oder Nickel versehen. Durch diese Schicht wird nicht nur der magnetische Fluß im Bereich der Kammern 104' und 104" verbessert, sondern diese Schicht 121 bzw. 122 schafft auch eine glatte Oberflächenstruktur für die den Innenraum 104 begrenzenden Flächen der Gehäuseteile 101 und 102 bzw. für die Flächen der Zwischenwand 108, so daß sich dort durch magnetischen Einfluß kalk- und eisenhaltige Fremdstoffe nicht anlagern können, sondern vielmehr trotz bestehender magnetischer Kräfte von dem den Innenraum 104 durchfließenden Wasser mitgeführt bzw. mitgerissen werden.

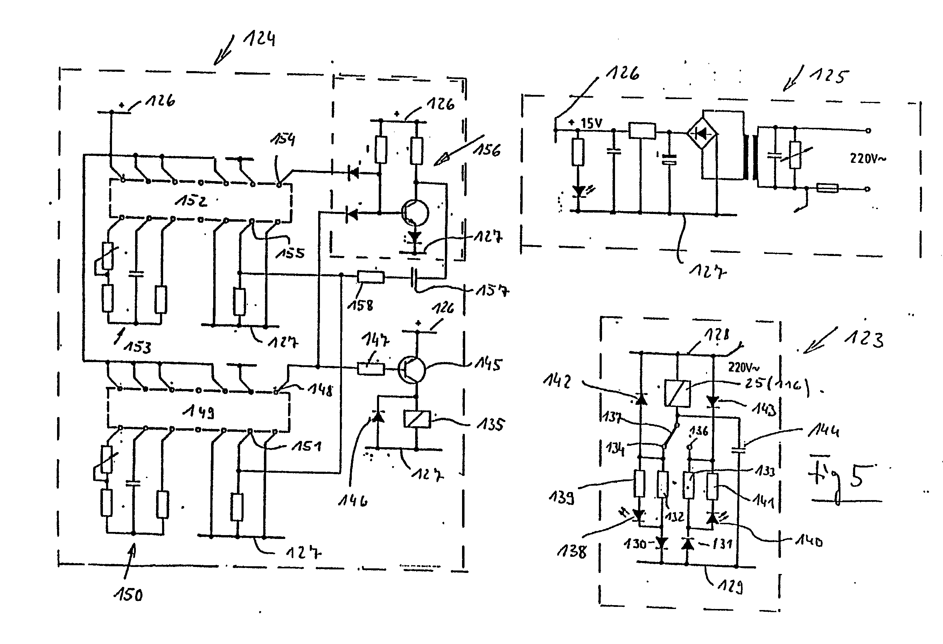

Wie oben erwähnt, wird die Magnetspule 25 bzw. 116 mit einem Gleichstrom angesteuert, dessen Polarität nach einem bestimmten Zeitprogramm geändert wird, was die in der Fig. 5 dargestellten Schaltung ermöglicht.

Die in der Fig. 5 dargestellte und zum Anschluß an das übliche Versorgungs- bzw. Wechselstromnetz (50/60 Hz/220 V) bestimmte Schaltung besteht aus drei Gruppen, nämlich aus dem die Magnetspule 25 bzw. 116 aufweisenden und mit der Versorgungsnetzspannung betriebenen Verbraucherstromkreis 123, aus dem Steuerstromkreis 124 sowie aus einem Netzteil 125, welches in üblicher Weise ausgebildet ist und zwischen seiner Ausgangsklemme 126 und der Schaltungsmasse 127 eine konstante Gleichspannung zur Versorgung des Steuerstromkreises 124 liefert.

Der Verbraucherstromkreis 123, der beispielsweise an die Phase 128 und den Nulleiter 129 des Versorgungsspannungsnetzes angeschlossen ist, enthält zwei gegenläufig gepolte Dioden 130 und 131, die jeweils in Serie mit einem Schutzwiderstand 132 bzw. 133 liegen, und von denen die Diode 130 mit ihrer Kathode und die Diode 131 mit ihrer Anode jeweils an den Nulleiter 129 angeschlossen sind. Über den Widerstand 132 ist die Diode 130 mit dem Ruhekontakt 134 eines Relais 135 verbunden, während die Diode 131 über den Widerstand 133 an den Arbeitskontakt 136 dieses Relais angeschlossen ist. Das als Umschaltkontakt wirkende bewegliche Kontaktelement 137 ist über die Magnetspule 125 bzw. 116 mit der Phase 128 verbunden.

Parallel zu den Widerständen 132 und 133 liegt jeweils eine aus einer Leuchtdiode 138 und einem Vorwiderstand 139 (paralle zum Widerstand 132) bzw. aus einer Leuchtdiode 140 und einem Vorwiderstand (parallel zum Widerstand 133) bestehende Serienschaltung, bei denen die Leuchtdiode 138 mit ihrer Kathode an die Anode der Diode 130 und die Leuchtdiode 140 mit ihrer Anode an die Kathode der Diode 131 angeschlossen ist. Der Verbraucherstromkreis besitzt weiterhin zwei Schutzdioden 142 und 143, von denen die Diode 142 mit ihrer Anode mit dem Ruhekontakt 143 und mit ihrer Kathode mit der Phase 128 und die Diode 143 mit ihrer Kathode mit dem Arbeitskontakt 136 und ihrer Anode mit der Phase 128 verbunden sind. Außerdem ist ein Kondensator 144 vorgesehen, der an den Nulleiter 129 sowie an denjenigen Anschluß der Magnetspule 25 bzw. 116 angeschlossen ist, welcher auch mit dem Kontaktelement 137 verbunden ist. Bei der in der Figur 5 dargestellten Ruhestellung des Kontaktelementes 137 fließt während der positiven, an der Phase 128 anliegenden Halbwellen der Netzspannung jeweils ein Strom durch die Magnetspule 25 bzw. 116, wobei dieser Strom durch die Magnetspule von der Leuchtdiode 138 angezeigt wird. Befindet sich das Kontaktelement 137 in seiner Arbeitsstellung, so fließt während der negativen Halbwellen der Versorgungsspannung an der Phase 128 ein Strom durch die Magnetspule 25 bzw. 116. Dieser Strom wird dann durch die Leuchtdiode 140 angezeigt. Bei fehlendem Strom durch die Magnetspule 25 bzw. 116 in der einen oder aber in beiden Stellungen des Kontaktelementes 137 (z.B. bei einem Fehler im Relais 135 oder bei einem Fehler in der Magnetspule) leuchten die betreffenden Leuchtdioden 138 bzw. 140 nicht auf, so daß diese nicht nur als Anzeige für den jeweiligen Betriebszustand (Stellung des Kontaktelementes 137), sondern auch als Funktionskontrolle des Gerätes dienen.

Die Ansteuerung des Kontaktelementes 137 erfolgt durch die Magnetspule des Relais 135, die im Steuerstromkreis 124, d.h. im Kollektorstromkreis eines Ausgangstransistors 145 parallel zu einer Schutzdiode 146 zwischen dem Kollektor dieses Transistors und der Schaltungsmasse 127 vorgesehen ist. Der Transistor 145, dessen Emitter mit dem Anschluß 126 verbunden ist, ist mit seiner Basis über einen Vorwiderstand 147 mit dem Ausgang 148 eines von einem IC gebildeten Timers 149 verbunden. Der Timer 149, der für seine Versorgung an den Anschluß 126 sowie an die Schaltungsmasse 127 angeschlossen ist, besitzt ein einstellbares Zeitglied 150 in Form eines RC-Netzwerkes mit einem veränderbaren Widerstand sowie einen Reset-Eingang 151, der den Timer 149, der bei Spannungs-Null den Timer 149 auf Null zurückstellt.

Der Steuerstromkreis 124 weist einen weiteren, von einem IC gebildeten Timer 152 auf, der hinsichtlich seiner Ausbildung dem Timer 149 entspricht und ein einstellbares, von einem RC-Netzwerk gebildetes Zeitglied 153; einen Ausgang 154 sowie einen Reset-Eingang 155 aufweist, welcher bei Anliegen von Spannungs-Null den ebenfalls zwischen dem Anschluß 126 und der Schaltungsmasse 127 betriebenen Timer 152 auf Null zurückstellt. Die Ausgänge 148 und 154 sind jeweils mit einem Eingang eines NAND-Gatters 156 verbunden, dessen Ausgang über eine Serienschaltung aus dem Kondensator 157 und dem Widerstand 158 an die beiden Reset-Eingänge 151 und 155 angeschlossen ist. Die Timer 149 und 152 sind jeweils als Univibrator derart geschaltet, daß nach dem Einschalten des Gerätes die Spannung an den Ausgängen 148 und 154 zunächst Null ist und erst jeweils nach einer durch das betreffende Zeitglied 150 bzw. 153 vorgegebenen Schaltzeit T1 (Schaltzeit des Timers 149) bzw. T2 (Schaltzeit des Timers 152) an diesen Ausgängen eine Spannung anliegt, wobei durch entsprechende Einstellung der Zeitglieder 150 und 153 dafür gesorgt ist, daß die Schaltzeit T2 um einen Betrag t größer ist als die Schaltzeit T1, wobei t ein Bruchteil von Tl ist. Bei einer bevorzugten Ausführungsform sind Tl etwa 60 Sekunden, T2 etwa 65 Sekunden und damit t ca. 5 Sekunden.

Die Arbeitsweise der Schaltung läßt sich, wie folgt, erläutern:

Nach dem Einschalten des Gerätes sind die Ausgängen 148 und 154 zunächst Null. Hierdurch wird der Transistor 145 geöffnet und das Kontaktelement 137 schaltet aus der in der Fig. 5 dargestellten Ruhestellung in die Arbeitsstellung um, so daß über die Diode 131 ein den negativen Halbwellen an der Phase 128 entsprechender Strom durch die Magnetspule 25 bzw. 116 fließt. Nach der Schaltzeit T1 liegt am Ausgang 148 eine positive Spannung an, wodurch der Transistor 145 gesperrt wird und das Kontaktelement 137 die in der Fig. 5 dargestellte Ruhestellung einnimmt, wodurch nun über die Diode 130 ein Strom in umgekehrter Richtung durch die Magnetspule 25 bzw. 116 entsprechenden positiven Halbwellen der Phase 128 fließt. Nach Erreichen der Schaltzeit T2 liegt auch am Ausgang 154 und damit an beiden Eingängen des Gatters 156 eine positive Spannung an, so daß durch das Ausgangssignal dieses Gatters beide Timer 149 und 152 auf Null zurückgesetzt werden, wodurch die Signale an den Ausgängen 148 und 154 wieder Null werden, das Kontaktelement 137 des Relais 135 durch den Transistor 145 wieder in die Arbeitsstellung umgeschaltet wird und der vorbeschriebene "Zählvorgang" der Timer 149 und 152 erneut beginnt. Durch die vorbeschriebene Schaltung wird somit ein periodisches Umschalten der Polarität des Stromes durch die Magnetspule 25 bzw. 116 in der Weise erreicht, daß in einer größeren Zeitperiode (z.B. 60 Sekunden) der Strom durch diese Magnetspule in der einen Richtung und in einer anschließenden kürzeren Zeitperiode (5 Sekunden) in umgekehrter Richtung fließt, wobei während der ersten, größeren Zeitperiode die eigentliche Behandlung des Wassers mit dem Magnetfeld erfolgt und in der kürzeren, zweiten Zeitperiode evtl. im Inneren des Gerätes abgelagerte Partikel abgestoßen und von dem behandelten Wasser mitgeführt werden. Für das erzielte Ergebnis ist es wesentlich, daß die zweite Zeitperiode nur einen Bruchteil der ersten Zeitperiode beträgt.

## Patentansprüche

1. Vorrichtung zur Beseitigung von Kesselstein bzw. zum Verhüten der Bildung von Kesselstein in von einer Flüssigkeit, z.B. Wasser, durchströmten Rohrsystemen, wobei die Flüssigkeit einem von einer Magnetspule erzeugten Magnetfeld ausgesetzt wird, mit einem in einem Gehäuse gebildeten und zu einer Gehäuseachse kreissymmetrischen Innenraum, mit einer den Innenraum in zwei Kammern unterteilenden, senkrecht zur Gehäuseachse angeordneten Zwischenwand, die mit allseitigem Abstand von der den Innenraum begrenzenden Innenfläche des Gehäuses angeordnet ist, mit einer im Gehäuse gebildeten Einlaßöffnung an der einen Kammer sowie mit einer im Gehäuse gebildeten Auslaßöffnung an der anderen Kammer, wobei die Einlaßöffnung und die Auslaßöffnung jeweils den mittleren Bereich der Zwischenwand gegenüberliegen, mit einer die Zwischenwand konzentrisch umschließenden und in einer ringförmigen Ausnehmung des Gehäuses angeordneten Magnetspule zur Erzeugung des Magnetfeldes, sowie mit einem die Zwischenwand konzentrisch umschließenden, zwischen der Magnetspule und dieser Innenwand vorgesehenen sowie den Innenraum des Gehäuses an seinem radial außenliegenden Umfang abschließenden ringförmigen Wandabschnitt, wobei die Zwischenwand und das Gehäuse zumindest in einem den Innenraum umgebenden Bereich aus ferromagnetischem Material bestehen, dadurch gekennzeichnet, daß die Zwischenwand (14, 108) sowie das Gehäuse (1, 2; 101, 102) zumindest in dem den Innenraum (6, 104) umgebenden Bereich aus Eisenguß gefertigt sind, welcher nach dem Gießen und vor der Bearbeitung der Innenflächen des Gehäuses sowie der Flächen der Zwischenwand (14, 108) geglüht wurde, daß der ringförmige Wandabschnitt (26, 118) aus nichtmagnetischem Material besteht und in Richtung der Gehäuseachse (S) eine Breite aufweist, die größer ist als der kleinste Abstand zwischen der Innenfläche des Gehäuses (1, 2; 101, 102) und einer gegenüberliegenden Fläche der Zwischenwand (14, 108), und daß zur Ansteuerung der Magnetspule (25, 116) ein Stromkreis (123, 124) vorgesehen ist, der einen sich in seiner Polarität periodisch ändernden Gleichstrom durch die Magnetspule (25, 116) liefert, welcher die Magnetspule (25, 116) in einem ersten Zeitintervall (T1) in einer ersten Richtung und in einem zweiten Zeitintervall (t) in einer umgekehrten Richtung durchfließt.

2. Vorrichtung nach Anspruch 1, dadurch gekennzeichnet, daß das erste Zeitintervall (T1) größer ist als das zweite Zeitintervall (t).

3. Vorrichtung nach Anspruch 1 oder 2, dadurch gekennzeichnet, daß der ringförmige Wandabschnitt von einem Dichtungsring (26, 118) aus elastischem Material, z.B. aus Kunststoff oder Gummi gebildet ist, der zwischen zwei das Gehäuse bildenden Gehäuseteilen (1, 2; 101, 102) angeordnet ist.

4. Vorrichtung nach Anspruch 3, dadurch gekennzeichnet, daß die Gehäuseteile (1, 2, 101, 102) radial außerhalb der Magnetspule (25, 116) mit Stirnflächen (5, 103) gegeneinander anliegen und im Bereich der Magnetspule sowie im Bereich zwischen dieser und der dem Innenraum (6, 104) des Gehäuses zugewendeten inneren Ringfläche des Dichtungsringes (26, 118) einen Abstand voneinander aufweisen, der zumindest größer ist als der kleinste, zwischen der Innenfläche des Innenraumes (6, 104) und einer gegenüberliegenden Fläche der Zwischenwand (14, 108) gebildete Abstand.

5. Vorrichtung nach einem der Ansprüche 1 bis 4, dadurch gekennzeichnet, daß die Innenfläche des Gehäuses (1, 2; 101, 102) zumindest in einer Kammer (6', 6''; 104', 104'') ringstufenartig derart ausgebildet ist, daß sich in Richtung der Gehäuseachse (S) der Abstand zwischen der Innenfläche und einer senkrecht zur Gehäuseachse (S) verlaufenden Mittelebene (M) der Zwischenwand (14) mit zunehmendem radialen Abstand von der Gehäuseachse (S) stufen- oder treppenartig verkleinert.

6. Vorrichtung nach einem der Ansprüche 1 bis 5, dadurch gekennzeichnet, daß die Zwischenwand (14) an ihrer diese wenigstens eine Kammer (6', 6'') begrenzenden Seite ringstufenartig in der Form ausgebildet ist, daß sich der Abstand dieser Seite von der Mittelebene (M) mit zunehmenden radialen Abstand von der Gehäuseachse (S) stufen- bzw. treppenartig verringert.

7. Vorrichtung nach Anspruch 5 oder 6, dadurch gekennzeichnet, daß die Innenfläche des Gehäuses und/oder die Seite der Zwischenwand (14) in dem ringstufenartig ausgebildeten Bereich jeweils erste Ringflächen (7–10, 19–21), die die Gehäuseachse (S) konzentrisch umschließen sowie senkrecht zu der Gehäuseachse (S) liegen, sowie zwischen den ersten angeordnete zweite Ringflächen (11–13, 22–23) aufweisen, die die Gehäuseachse (S) konzentrisch und kreiszylinderartig umschließen.

8. Vorrichtung nach Anspruch 7, dadurch gekennzeichnet, daß zumindest im radial außen liegenden Bereich der wenigstens einen Kammer (6', 6'') einer ersten Ringfläche (7–10) der Innenfläche des Gehäuses (1, 2) jeweils eine erste Ringfläche (19–21) an der Zwischenwand (14) gegenüberliegt.

9. Vorrichtung nach Anspruch 7 oder 8, dadurch gekennzeichnet, daß zumindest im radial außen liegenden Bereich der wenigstens einen Kammer (6', 6'') einer zweiten Ringfläche (11–13) an der Innenfläche des Gehäuses (1, 2) jeweils eine zweite Ringfläche (22, 23) an der Zwischenwand (14) benachbart liegt, und daß von diesen einander jeweils benachbarten Ringflächen die an der Zwischenwand (14) vorgesehene zweite Ringfläche (22, 23) jeweils einen kleineren Radius aufweist als die zugehörige benachbarte zweite Ringfläche (11–13) an der Innenfläche des Gehäuses (1, 2).

10. Vorrichtung nach Anspruch 9, dadurch gekennzeichnet, daß zumindest im radial außen liegenden Bereich der wenigstens einen Kammer (6', 6'') zwischen den ersten und zweiten Ringflächen (7–10, 19–21, 11–13, 22, 23) wenigstens zwei, die Gehäuseachse (S) konzentrisch umschließende ringförmige Räume gebildet sind, die einen unterschiedlichen Abstand von der Gehäuseachse (S) sowie von der Mittelebene (M) aufweisen und über eine obere bzw. untere ringförmige Öffnung miteinander in Verbindung stehen, und daß der Abstand der ersten Ringfläche (7), die den radial außenliegenden Raum an der Innenfläche des Gehäuses begrenzt, von der Mittelebene (M) der Zwischenwand (14) gleich, vorzugsweise jedoch kleiner ist als der Abstand zwischen der ersten Ringfläche (20), die den radial innenliegenden ringförmigen Raum an der Zwischenwand (14) begrenzt, und dieser Mittelebene (M).

11. Vorrichtung nach einem der Ansprüche 1 bis 10, dadurch gekennzeichnet, daß zumindest in einer Kammer (6', 6'') der Abstand, den die Zwischenwand (14) in Richtung der Gehäuseachse (S) von der Innenfläche des Gehäuses (1, 2) aufweist, sich mit abnehmenden radialen Abstand von der Gehäuseachse (S) vergrößert.

12. Vorrichtung nach einem der Ansprüche 1 bis 11, dadurch gekennzeichnet, daß die Zwischenwand (14) an ihrer der Einlaßöffnung (17) und/oder der Auslaßöffnung (18) zugewendeten Fläche einen Vorsprung aufweist, der sich zu seinem freien Ende hin verjüngt.

13. Vorrichtung nach Anspruch 12, dadurch gekennzeichnet, daß der Vorsprung (16) als Spitze oder halbkugelförmig ausgebildet ist.

14. Vorrichtung nach einem der Ansprüche 1 bis 13, dadurch gekennzeichnet, daß radial innerhalb der Magnetspule (116) im Gehäuse (101, 102) ein Spalt (117) gebildet ist, der die Gehäuseachse (S) konzentrisch umschließt, sich radial zu dieser Gehäuseachse zwischen dem Innenraum (104) des Gehäuses und der Magnetspule erstreckt und durch eine Dichtung (118) abgedichtet ist, daß dieser Spalt (117) über seinen gesamten Bereich in einer Achsrichtung parallel zur Gehäuseachse (S) stets eine Breite von mindestens 3,8 mm aufweist.

15. Vorrichtung nach einem der Ansprüche 1–14, dadurch gekennzeichnet, daß die Zwischenwand (108) bevorzugt an ihrem der Einlaßöffnung (19) bzw. der Auslaßöffnung (120) gegenüberliegenden Bereich mit wenigstens einer, die Gehäuseachse (S) konzentrisch umschließenden nutenförmigen Vertiefung (111, 112) versehen ist.

16. Vorrichtung nach einem der Ansprüche 1–15, dadurch gekennzeichnet, daß die Zwischenwand (108) eine die Gehäuseachse (S) umschließende, leicht oval ausgebildete Rand- bzw. Umfangsfläche aufweist, so daß im Bereich dieser Randfläche der zwischen den beiden Kammern (104', 104'') im Innenraum (104) gebildete Spalt entlang der Randfläche eine sich ändernde Breite besitzt.

17. Vorrichtung nach einem der Ansprüche 1–16, dadurch gekennzeichnet, daß die Schaltung einen ersten Stromkreis (123) mit einem elektrisch steuerbaren Umschaltelement (135, 137), über welches die Magnetspule (25, 116) periodisch über gegenläufig gepolte Dioden (130, 131) mit einer Wechselspannung verbunden wird, sowie einen zweiten Stromkreis (124) zur Erzeugung eines Steuersignals zur Ansteuerung des Stromschaltelementes (135, 137) aufweist.

18. Vorrichtung nach einem der Ansprüche 1–17, dadurch gekennzeichnet, daß das Gehäuse an seinen den Innenraum (6, 104) begrenzenden Innenflächen sowie die Zwischenwand (14, 108) an ihren dem Innenraum des Gehäuses liegenden Flächen jeweils mit einer Schicht bzw. mit einem Überzug aus einem korrosionsbeständigem Material mit hohem magnetischem Leitwert, z.B. aus Kobalt oder Nickel versehen sind.

**Revendications**

1. Dispositif pour l'élimination et la prévention du tartre dans un système de tuyaux dans lequel circule un liquide, par exemple de l'eau, et où le liquide est soumis à un champ magnétique produit par une bobine excitatrice, comportant un intérieur formé dans un logement et qui est symétrie circulaire par rapport à un axe du logement, une paroi intermédiaire disposée perpendiculairement à l'axe du logement, divisant l'intérieur en deux chambres, qui est disposée partout à une distance de la surface intérieure limitant l'intérieur, une ouverture d'entrée formée dans le logement à l'une des chambres et une ouverture de sortie à l'autre chambre, l'ouverture d'entrée et l'ouverture de sortie étant disposées chacune en face de la zone médiane de la paroi intermédiaire, une bobine excitatrice pour la production du champ magnétique entourant concentriquement la paroi intermédiaire, disposée dans un évidement annulaire du logement, ainsi qu'une partie de paroi annulaire entourant concentriquement la paroi intermédiaire, prévue entre la bobine excitatrice et cette paroi intermédiaire et fermant l'intérieur du logement à sa périphérie radiale extérieure, la paroi intermédiaire et le logement étant constitués d'un matériau ferromagnétique au moins dans une région entourant l'intérieur, caractérisé en ce que la paroi intermédiaire (14, 108) ainsi que le logement (1, 2; 101, 102) sont fabriqués en fonte au moins dans la région entourant l'intérieur (6, 104), fonte ayant été soumise à un recuit après la coulée et avant l'usinage des surfaces intérieures du logement ainsi que des surfaces de la paroi intermédiaire (14, 108), la partie de paroi annulaire (26, 118) est constituée de matériau non magnétique et présente en direction de l'axe du logement (S) une largeur qui est supérieure à la plus petite distance entre la surface intérieure du logement (1, 2; 101, 102) et la surface de la paroi intermédiaire (14, 108) se trouvant en face, et on prévoit pour la commande de la bobine excitatrice (25, 116) un circuit électrique (123, 124) qui fournit un courant continu à travers la bobine magnétique (25, 116) lequel change périodiquement de polarité et qui parcourt la bobine magnétique (25, 116) en un premier sens dans un premier intervalle de temps (T1) et en un sens inverse dans un deuxième intervalle de temps.

2. Dispositif selon la revendication 1 caractérisé en ce que le premier intervalle de temps (T1) est plus grand que le deuxième intervalle de temps (t).

3. Dispositif selon la revendication 1 ou 2 caractérisé en ce que la partie de paroi annulaire est formée par un anneau d'étanchéité (26, 118) en matériau élastique, par exemple en plastique nu en caoutchouc, qui est disposé entre deux parties (1, 2; 101, 102) formant le logement.

4. Dispositif selon la revendication 3 caractérisé en ce que les parties de logement (1, 2; 101, 102) prennent appui l'une sur l'autre avec leurs surfaces frontales (5, 103) radialement et extérieurement à la bobine magnétique et qu'elles présentent une distance l'une de l'autre dans la région de la bobine excitatrice ainsi que dans la région entre celle-ci et la surface annulaire intérieure de l'anneau d'étanchéité en regard de l'intérieur (6, 104) du logement, distance qui est au moins supérieurs à la distance la plus petite entre la surface de l'intérieur (6, 104) et une surface opposée de la paroi intermédiaire (14, 108).

5. Dispositif selon l'une des revendications 1 à 4 caractérisé en ce que la surface intérieure du logement (1, 2; 101, 102) est réalisée avec des degrés annulaires de manière telle que la distance, en direction de l'axe du logement (S), entre la face intérieure et un plan médian (M) de la paroi intermédiaire (14) disposé perpendiculairement à l'axe du logement (S) diminue par degrés ou en escalier lorsque la distance radiale à l'axe du logement (S) croît.

6. Dispositif selon l'une des revendications 1 à 5 caractérisé en ce que la paroi intermédiaire (14) est réalisée avec des degrés annulaires à son côté limitant au moins une chambre (6', 6") de manière telle que la distance de ce côté au plan médian (M) diminue par degrés lorsque la distance radiale à l'axe du logement (S) augmente.

7. Dispositif selon la revendication 5 ou 6 caractérisé en ce que la face intérieure du logement et/ou le côté de la paroi intermédiaire (14) comportent, dans la région réalisée avec des degrés annulaires, les premières surfaces annulaires (7–10; 19–31) qui entourent concentriquement l'axe du logement (S) et sont disposées perpendiculairement à l'axe du logement (S) ainsi que les deuxièmes surfaces annulaires (1–13; 22–23), disposées entre les premières, qui entourent l'axe du logement (S) concentriquement et en formant des surfaces cylindriques circulaires.

8. Dispositif selon la revendication 7 caractérisé en ce que au moins dans la région radialement vers l'extérieur de l'une des chambres (6', 6") une première surface annulaire (19–21) à la paroi intermédiaire (14) est chaque fois disposée en face d'une première surface annulaire (7–10) de la face intérieure du logement (1, 2).

9. Dispositif selon la revendication 7 ou 8 caractérisé en ce que, au moins dans la région radialement vers l'extérieur de l'une des chambres (6', 6") au moins, une deuxième surface annulaire (22, 23) à la paroi intermédiaire (14) est disposée chaque fois au voisinage d'une deuxième surface annulaire (11–13) à la face intérieure du logement (1, 2) et dans ces surfaces annulaires respectivement voisines la deuxième surface annulaire (22, 23) prévue à la paroi intermédiaire (14) présente chaque fois un rayon plus petit que celui de la deuxième surface annulaire voisine correspondante (11–13) à la surface intérieure du logement (1, 2).

10. Dispositif selon la revendication 9 caractérisé en ce qu'au moins dans la région radialement disposée vers l'extérieur de l'une des chambres au moins (6, 6') entre les premières et les deuxièmes surfaces annulaires (7–10, 19–21; 11–13, 22, 23), au moins deux espaces annulaires entourant concentriquement l'axe du logement (S) sont formés lesquels présentent une distance différente à l'axe du logement (S) ainsi qu'au plan médian (M) et sont en communication ensemble au moyen d'une ouverture annulaire supérieure ou inférieure, et la distance de la première surface annulaire (7), qui limite l'espace situé radialement vers l'extérieur à la surface intérieure du logement, au plan médian (M) de la paroi intermédiaire (14) est égale, de préférence cependant inférieure, à la distance entre la première surface annulaire (20), qui limite l'espace annulaire situé radialement vers l'intérieur à la paroi intermédiaire (14), et ce plan médian (M).

11. Dispositif selon l'une des revendications 1 à 10 caractérisé en ce qu'au moins dans l'une des chambres (6', 6") la distance que présente la paroi intermédiaire (14), en direction de l'axe du logement (S) par rapport à la surface intérieure du logement (1, 2) augmente lorsque la distance radiale à l'axe du logement (S) diminue.

12. Dispositif selon l'une des revendications 1 à 11 caractérisé en ce que la paroi intermédiaire (14) comporte à sa surface en regard de l'ouverture d'entrée (17) et/ou de l'ouverture de sortie (18) une partie saillante qui se rétrécit vers son extrémité libre.

13. Dispositif selon la revendication 12 caractérisé en ce que la partie saillante (16) est réalisée sous forme de pointe ou en demisphère.

14. Dispositif selon l'une des revendications 1 à 13 caractérisé en ce qu'une fente (117) est formée radialement à l'intérieur de la bobine magnétique (116) dans le logement (101, 102), fente qui entoure concentriquement l'axe du logement (S), s'étend radialement par rapport à cet axe du logement entre l'intérieur (104) du logement et la bobine magnétique et est rendue étanche par un joint (118), et cette fente (117) présente constamment une largeur d'au moins 3,8 mm sur toute sa région dans une direction axiale parallèle à l'axe du logement (S).

15. Dispositif selon l'une des revendications 1 à 14 caractérisé en ce que la paroi intermédiaire (108) comporte de préférence dans sa région opposée à l'ouverture d'entrée (119) ou l'ouverture de sortie (120) au moins une cavité en forme de rainure (111, 112) entourant concentriquement l'axe de logement (S).

16. Dispositif selon l'une des revendications 1 à 15 caractérisé en ce que la paroi intermédiaire (108) comporte une surface latérale de forme légèrement ovale de sorte que dans la région de cette surface latérale la fente formée entre les deux chambres (104', 104") dans l'intérieur (104) présente le long de la surface latérale une largeur variable.

17. Dispositif selon l'une des revendications 1 à 16 caractérisé en ce que le montage comporte un premier circuit (123) avec un élément de commutation (135, 137) pouvant être commandé électriquement au moyen duquel la bobine excitatrice (25, 116) est connectée périodiquement à une tension alternative par l'intermédiaire de diodes (130, 131) polarisées en sens contraire, ainsi qu'un deuxième circuit (124) pour la production d'un signal de commande pour commander l'élément de commutation (135, 137).

18. Dispositif selon l'une des revendications 1 à 17 caractérisé en ce que le logement comporte à ses surfaces intérieures limitant l'intérieur (6, 104) et la paroi intermédiaire (14, 108) comporte à ses surfaces se trouvant à l'intérieur du logement une couche ou un revêtement en un matériau résistant à la corrosion à conductance magnétique élevée, par exemple en cobalt ou nickel.

## Claims

1. A device for removing boiler scala or for preventing the formation of boiler scala in pipe systems through which flows a liquid, e.g. water, the liquid being subjected to a magnetic field produced by a magnetic coil, with an interior formed in a casing and circular-symmetrical with respect to an axis of the casing, with an intermediate wall which divides the interior into two chambers and is arranged at right angles to the axis of the casing and which is arranged at a distance all round from the inner face of the casing bounding the interior, with an inlet opening – formed in the casing – on one chamber and with an outlet opening – formed in the casing – on the other chamber, the inlet opening and the outlet opening each being opposite the central area of the intermediate wall, with a magnetic coil surrounding the intermediate wall concentrically and arranged in an annular recess in the casing for producing the magnetic field, and with an annular wall portion which surrounds the intermediate wall concentrically and is provided between the magnetic coil and the said inner wall and which seals off the interior of the casing on its radially outer periphery, the intermediate wall and the casing consisting – at least in an area surrounding the interior – of ferromagnetic material, characterized in that the intermediate wall (14, 108) and the casing (1, 2; 101, 102) are produced – at least in the area surrounding the interior (6, 104) – from cast iron which has been annealed after casting and before the machining of the inner faces of the casing and the faces of the intermediate wall (14, 108), the annular wall portion (26, 118) consists of non-magnetic material and in the direction of the casing axis (S) has a width which is greater than the smallest distance between the inner face of the casing (1, 2; 101, 102) and an opposite face of the intermediate wall (14, 108), and in order to control the magnetic coil (25, 116) an electric current (123, 124) is provided which delivers a direct current periodically changing in its polarity through the magnetic coil (25, 116), the direct current flowing through the magnetic coil (25, 116) in a first direction in a first time interval (T1) and in a reversed direction in a second time interval (t).

2. A device according to Claim 1, characterized in that the first time interval (T1) is greater than the second time interval (t).

3. A device according to Claim 1 or 2, characterized in that the annular wall portion is formed by a sealing ring (26, 118) of resilient material, e.g. of plastics material or rubber, which is arranged between two casing parts (1, 2; 101, 102) forming the casing.

4. A device according to Claim 3, characterized in that the casing parts (1, 2, 101, 102) rest against one another with end faces (5, 103) radially outside the magnetic coil (25, 116) and, in the region of the magnetic coil and in the region between the latter and the inner annular face of the sealing ring (26, 118) facing the interior (6, 104) of the casing, are at a distance from one another which is at least greater than the smallest distance formed between the inner face of the interior (6, 104) and an opposite face of the intermediate wall (14, 108).

5. A device according to any one fo Claims 1 to 4, characterized in that the inner face of the casing (1, 2; 101, 102) is formed in an annular, stepped manner at least in one chamber (6', 6''; 104', 104''), in such a way that in the direction of the casing axis (S) the distance between the inner face and a median plane (M) – extending at right angles to the casing axis (S) – of the intermediate wall (14) decreases in a graded or stepped manner at an increasing radial distance from the casing axis (S).

6. A device according to any one of Claims 1 to 5, characterized in that the intermediate wall (14) on the side defining this – at least one – chamber (6', 6'') is formed in an annular, stepped manner in such a way that the distance of this side from the median plane (M) decreases in a graded or stepped manner at an increasing radial distance from the casing axis (S).

7. A device according to Claim 5 or 6, characterized in that the inner face of the casing and/or the side of the intermediate wall (14) in the region formed in an annular, stepped manner each comprise first annular face (7–10; 19–21), which surround the casing axis (S) concentrically and which lie at right angles to the casing axis (S), and second annular faces (11–13; 22–23), which are arranged between the first ones and which surround the casing axis (S) concentrically and in a circular cylindrical manner.

8. A device according to Claim 7, characterized in that at least in the radially outer region of the – at least one – chamber (6', 6'') one first annular face (19–21) on the intermediate wall (14) is in each case opposite a first annular face (7–10) of the inner face of the casing (1, 2).

9. A device according to Claim 7 or 8, characterized in that at least in the radially outer region of the – at least one – chamber (6', 6'') one second annular face (22, 23) on the intermediate wall (14) is in each case adjacent a second annular face (11–13) on the inner face of the casing (1, 2), and of these mutually adjacent annular faces the second annular face (22, 23) provided on the intermediate wall (14) has in each case a radius which is smaller than the associated adjacent second annular face (11–13) on the inner face of the casing (1, 2).

10. A device according to Claim 9, characterized in that at least in the radially outer area of the – at least one – chamber (6', 6'') at least two annular spaces, which surround the casing axis (S) concentrically and which are at different distances from the casing axis (S) and from the median plane (M) and are connected to each other by way of an upper and lower annular opening respectively, are formed between the first and second annular faces (7–10, 19–21; 11–13), 22, 23), and the distance of the first annular face (7), which bounds the radially outer space on the inner face of the casing, from the median plane (M) of the intermediate wall (14) is equal to, but preferably smaller than, the distance between the first annular face (20), which bounds the radially inner annular space on the intermediate wall (14), and the said median plane (M).

11. A device according to any one of Claims 1 to 10, characterized in that at least in one chamber (6', 6'') the distance of the intermediate wall (14) in the direction of the casing axis (S) from the inner face of the casing (1, 2) increases at a decreasing radial distance from the casing axis (S).

12. A device according to any one of Claims 1 to 11, characterized in that the intermediate wall (14) is provided on its face towards the inlet opening (17) and/or the outlet opening (18) with a projection which tapers towards its free end.

13. A device according to Claim 12, characterized in that the projection (16) is formed as a point or hemisphere.

14. A device according to any one of Claims 1 to 13, characterized in that a gap (117), which surrounds the casing axis (S) concentrically and which extends radially to the said casing axis between the interior (104) of the casing (101, 102) and the magnetic coil, is formed radially inside the magnetic coil (116) in the casing, the said gap (117) being sealed by a seal (118) and having a constant width of at least 3.8 mm over its entire area in an axial direction parallel to the casing axis (S).

15. A device according to any one of Claims 1 to 14, characterized in that the intermediate wall (108) is preferably provided on its area opposite the inlet opening (19) or the outlet opening (120) with at least one grooveshaped depression (11, 112) surrounding the casing axis (S) concentrically.

16. A device according to any one of Claims 1 to 15, characterized in that the intermediate wall (108) has a slightly oval edge face or peripheral face surrouding the casing axis (S), so that in the area of the said edge face the gap formed between the two chambers (104', 104'') in the interior (104) has a varying width along the edge face.

17. A device according to any one of Claims 1 to 16, characterized in that the circuitry comprises a first circuit (123) with an electrically controllable switching element (135, 137), by way of which the magnetic coil (25, 116) is connected periodically to an alternating voltage by way of oppositely poled diodes (130, 131), and a second circuit (124) for generating a control signal for controlling the current-switching element (135, 137).

18. A device according to any one of Claims 1 to 17, characterized in that the casing on its inner faces bounding the interior (6, 104) and the intermediate wall (14, 108) on its faces lying (in?) the interior of the casing are provided in each case with a layer or a coating of a corrosion-resistant material with a high magnetic conductivity, e.g. of cobalt or nickel.

Fig.1

Fig.2

Fig.3

EP 0 255 914 B1

Fig.4

101 (102)

115

109

111
112
113
114

108

Fig. 5